(19) Europäisches Patentamt / European Patent Office / Office européen des brevets

(11) **EP 3 817 312 B1**

(12) **EUROPEAN PATENT SPECIFICATION**

(45) Date of publication and mention of the grant of the patent:
**06.11.2024 Bulletin 2024/45**

(21) Application number: **20204232.1**

(22) Date of filing: **28.10.2020**

(51) International Patent Classification (IPC):
**H04L 25/02** *(2006.01)*

(52) Cooperative Patent Classification (CPC):
**H04L 25/0224; H04L 25/0212; H04L 25/0248**

(54) **METHOD AND APPARATUS FOR ESTIMATING ANGLE OF ARRIVAL OF SIGNALS IN WIRELESS COMMUNICATION SYSTEM**

VERFAHREN UND VORRICHTUNG ZUR SCHÄTZUNG DES EINFALLSWINKELS VON SIGNALEN IN EINEM DRAHTLOSEN KOMMUNIKATIONSSYSTEM

PROCÉDÉ ET APPAREIL D'ÉVALUATION D'ANGLE D'ARRIVÉE DE SIGNAUX DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2019 US 201962927438 P**
**31.10.2019 US 201962928414 P**

(43) Date of publication of application:
**05.05.2021 Bulletin 2021/18**

(73) Proprietor: **Hon Lin Technology Co., Ltd.**
**Tapei 114 (TW)**

(72) Inventors:
• **SHENG, Huan-Tang**
**114 Tapei (TW)**
• **WU, Wen-Rong**
**114 Tapei (TW)**
• **HSIAO, Wei-Han**
**114 Tapei (TW)**
• **SERVETNYK, Mykola**
**114 Tapei (TW)**

(74) Representative: **Zaboliene, Reda**
**Metida**
**Business center Vertas**
**Gyneju str. 16**
**01109 Vilnius (LT)**

(56) References cited:
**US-A1- 2005 250 564     US-A1- 2019 212 409**

• **ANWEN LIAO ET AL: "2D Unitary ESPRIT Based Super-Resolution Channel Estimation for Millimeter-Wave Massive MIMO with Hybrid Precoding", ARXIV.ORG, CORNELL UNIVERSITY LIBRARY, 201 OLIN LIBRARY CORNELL UNIVERSITY ITHACA, NY 14853, 30 October 2017 (2017-10-30), XP080832834**
• **ZUO WEI ET AL: "SLFM: A new DOA estimator for wideband signals", 9TH INTERNATIONAL CONFERENCE ON ELECTRONIC MEASUREMENT & INSTRUMENTS, 2009 : ICEMI '09 ; 16 - 19 AUG. 2009, BEIJING, CHINA ; PROCEEDINGS, IEEE, PISCATAWAY, NJ, USA, 16 August 2009 (2009-08-16), pages 4 - 107, XP031537132, ISBN: 978-1-4244-3863-1**

**Description**

CROSS-REFERENCE TO RELATED APPLICATION

This application claims priority to U.S. Provisional Patent Application No. 62/927,438, filed on October 29, 2019, and entitled "Joint Channel and AoA Estimation for OFDM Systems with Hybrid Antenna Array: One Channel Tap with Multiple AoAs Problem", and U.S. Provisional Patent Application No. 62/928,414, filed on October 31, 2019, and entitled "JOINT CHANNEL AND AOA ESTIMATION IN OFDM SYSTEMS: ONE CHANNEL TAP WITH MULTIPLE AOAS PROBLEM".

FIELD

The subject matter herein generally relates to radio communications.

BACKGROUND

US20050250564A1 discloses an adaptive antenna radio communication device comprises a divided band direction estimating unit for estimating the direction by calculating the cross correlations between a pilot signal and sub-carrier signals of the respective divided bands received by an array antenna and calculating a spatial profile from correlation matrices determined by combining the correlation values between antenna elements of the different sub-carriers according to the output of the cross correlation calculation; a divided band array weight creating unit for creating a weight of a receive array having a directional beam in the direction of estimation for each divided band; and a sub-carrier directivity creating unit for creating a directivity by multiplication-combining the created receive array weight with the corresponding sub-carrier signal.

US20190212409A1 discloses a method for estimating angle information for a wireless communication system includes receiving, by a wireless transmit/receive unit (WTRU), a plurality of first training symbols during a first period of time, wherein the plurality of first training symbols is transmitted using a first transmit beamforming vector fixed during the first period of time and received using a first receive beamforming, vector varied during the first period of time; estimating, by the WTRU, a plurality of first channel delay values based on the plurality of first training symbols; estimating, by the WTRU, a plurality of first channel values based on the plurality of first channel delay values; and estimating, by the WTRU, a first angle value of a path of a wireless channel based on the plurality of first channel values.

Anwen Liao et al: "2D Unitary ESPRIT Based Super-Resolution Channel Estimation for Millimeter-Wave Massive MIMO With Hybrid Precoding", ARXIV.ORG, CORNELL UNIVERSITY LIBRARY, 30 October 2017, XP080832834 discloses Millimeter-wave (mmWave) massive multiple-input multiple-output (MIMO) with hybrid precoding is a promising technique for the future 5G wireless communications. Due to a large number of antennas but a much smaller number of radio frequency chains, estimating the high-dimensional mmWave massive MIMO channel will bring the large pilot overhead. To overcome this challenge, this paper proposes a super-resolution channel estimation scheme based on 2-D unitary ESPRIT algorithm. By exploiting the angular sparsity of mmWave channels, the continuously distributed angle of arrivals/departures (AoAs/AoDs) can be jointly estimated with high accuracy. Specifically, by designing the uplink training signals at both base station and mobile station, we first use low pilot overhead to estimate a low-dimensional effective channel, which has the same shift-invariance of array response as the high-dimensional mmWave MIMO channel to be estimated. From the low-dimensional effective channel, the super-resolution estimates of AoAs and AoDs can be jointly obtained by exploiting the 2-D unitary ESPRIT channel estimation algorithm. Furthermore, the associated path gains can be acquired based on the least squares criterion. Finally, we can reconstruct the high-dimensional mmWave MIMO channel according to the obtained AoAs, AoDs, and path gains. Simulation results have confirmed that the proposed scheme is superior to conventional schemes with a much lower pilot overhead.

Millimeter-wave (mmWave) communication is a key element in the fifth generation (5G) New Radio (NR) wireless communication system. Severe propagation losses in the mmWave channel call for massive antenna array to conduct beamforming, thus a receiver has to know angle of arrival (AoA) information.

In indoor environments, transmitted signals may propagate through multiple paths resulting in close time delays, which are not resolvable, this is the problem of one channel tap with multiple AoAs (OCMA).

Thus, there is room for improvement within the art.

BRIEF DESCRIPTION OF THE DRAWINGS

Implementations of the present technology will now be described, by way of embodiment, with reference to the attached figures, wherein:

FIG. 1 is a block diagram of one embodiment of an apparatus for estimating the angle of arrival of the signal.
FIG. 2 is a schematic block diagram of one embodiment of an antenna array of the apparatus of FIG. 1.
FIG. 3 is an example of one embodiment of a channel delay profile obtained by the apparatus of FIG. 1.
FIG. 4 is an example of one embodiment of a transmitting scheme at the transmitting side.
FIG. 5 is a flowchart of one embodiment of a method for estimating the angle of arrival.

DETAILED DESCRIPTION

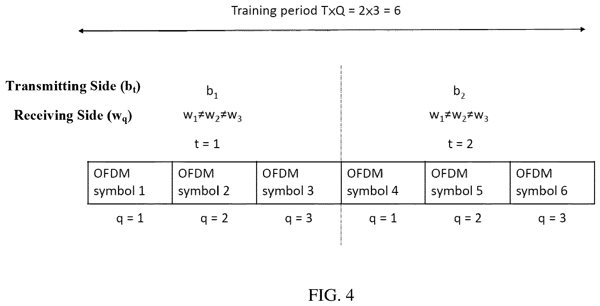

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.
References to "an" or "one" embodiment in this disclosure are not necessarily to the same embodiment, and such references mean "at least one".
In general, the word "module" as used hereinafter, refers to logic embodied in computing or firmware, or to a collection of software instructions, written in a programming language, such as Java, C, or assembly. One or more software instructions in the modules may be embedded in firmware, such as in an erasable programmable read-only memory (EPROM). The modules described herein may be implemented as either software and/or computing modules and may be stored in any type of non-transitory computer-readable medium or another storage device. Some non-limiting examples of non-transitory computer-readable media include CDs, DVDs, BLU-RAY, flash memory, and hard disk drives. The term "comprising", when utilized, means "including, but not necessarily limited to"; it specifically indicates open-ended inclusion or membership in a so-described combination, group, series, and the like.

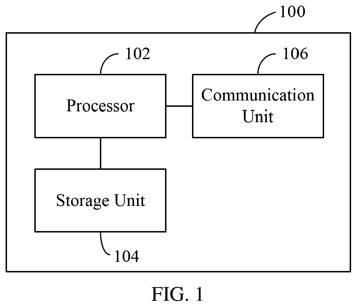

FIG. 1 illustrates a block diagram of an apparatus 100 for estimating an angle of arrival (AoA) of signals according to one embodiment. The apparatus 100 acts with a User Equipment (UE), a base station, and a wireless transmitting/receiving unit (WTRU). The apparatus 100 comprises a processor 102, a storage unit 104, and a communication unit 106.
The processor 102 controlling the apparatus 100 comprises a microcontroller, a microprocessor, or another circuit with processing capabilities, and executes or processes instructions, data, and computer programs stored in the storage unit 104.
The storage unit 104 comprises a read-only memory (ROM), a random access memory (RAM), a magnetic disk storage medium device, an optical storage medium device, a flash memory device, electrical, optical, or other physical/tangible (e.g., non-transitory) memory device, etc. The storage unit 104 is used to store one or more computer programs that control the operation of the apparatus 100 and which are executed by the processor 102. In the embodiment, the storage unit 104 stores or encodes one or more computer programs, and stores models, configurations, and computing parameters data, for the processor 102, to execute a method for estimating AOA according to various embodiments.
The communication unit 106 performs functions for transmitting and receiving signals through a wireless channel. The communication unit 106 comprises a transmission filter, a reception filter, an amplifier, a mixer, an oscillator, a digital-to-analog converter (DAC), and an analog-to-digital converter (ADC). The communication unit 106 may comprise multiple transmission/reception paths. Further, the communication unit 106 may comprise an antenna array comprising a plurality of antenna elements.

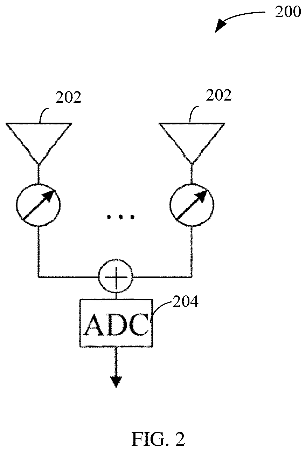

FIG. 2 illustrates a block diagram of an antenna array 200 of the communication unit 106 according to one embodiment. The antenna array 200 comprises $M_\gamma$ antennas 202 and one ADC 204. The signals received at each antenna 202 are first phase-shifted, i.e., multiplied by the phase-shifter coefficient, and then summed up as the input of the ADC 204.

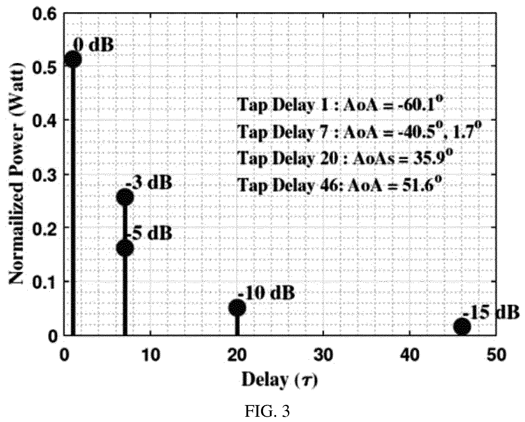

FIG. 3 illustrates an example of a channel delay profile of the antenna array 200 with $M_\gamma = 4$ antennas in a MIMO-OFDM system. The channel delay profile exists for every channel and link, respectively, formed by each beam arrangement between the receiving side and the transmitting side and indicates the intensity of a signal received through a multipath channel as a function of time delay. As FIG. 3 shows, at Tap Delay 7, there are two taps with two different AoAs. This is the OCMA problem for the tap at Tap Delay 7. Various embodiments on AoA estimation for the tap with the OCMA problem in a wireless communication system are disclosed.
In one embodiment, $Q$ consecutive OFDM symbols are transmitted at the transmitting side in a MIMO-OFDM system as training symbols for channel estimation. The transmission of $Q$ consecutive OFDM symbols is referred to as a training block. In order to resolve the OCMA problem, FIG. 4 illustrates an example of a transmitting scheme of transmitting training blocks with different transmitting beamforming vectors such that different paths experience different transmit beamforming gains. Let $t$ be the index of each training block, and $T$ be the number of training blocks, then the total number of OFDM symbols for the estimation is $T \times Q$. As shown in FIG. 4, the transmitting beamforming vectors $b_1$, $b_2$ are different for different training blocks, but $b_t$ remains the same within each training block. The $w_q$, denoting the receiving beamforming vectors, varies within each block.

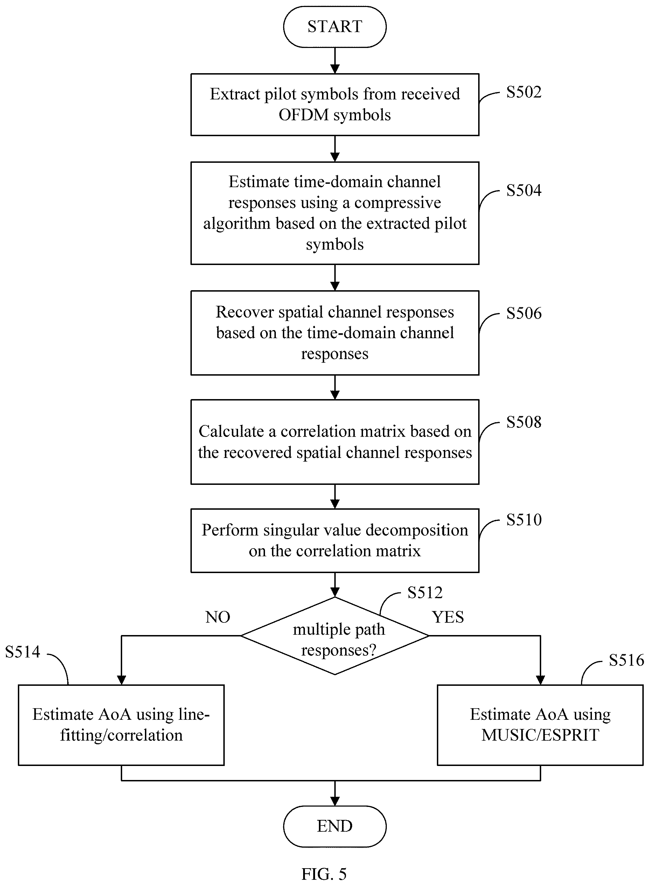

FIG. 5 illustrates a method for estimating AoA performed by the apparatus 100 at the receiving side according to one embodiment.

In the embodiment, the method for estimating AoA comprises three stages. The first stage is to estimate the time-domain channel impulse response for each channel tap. The second stage uses different transmitting beamforming vectors with different receiving beamforming vectors to decouple the channel responses for each antenna element of the antenna array 200. The third stage is to calculate the correlation matrix and use a subspace-based algorithm such as Multiple Signal Classification (MUSIC), Estimation of Signal Parameters via Rotational Invariance Techniques (ESPRIT) to estimate multiple AoAs.

The detailed steps of the method are shown in FIG. 5.

In order to remove distortion from the received input signals, the effects of the channels need to be estimated. In one embodiment, the channel estimation is implemented using pilot symbols. The pilot symbols may be transmitted by the transmitting side in the OFDM symbols at certain subcarriers. The pilot symbols have known values for both the transmitting side and the receiving side, thus the channel can be estimated using the pilot symbols.

At step S502, the apparatus 100 extracts pilot symbols from the received OFDM symbols. The extracted pilot symbols $\tilde{x}_1$, ...., $\tilde{x}_P$ are expressed as a diagonal matrix $\tilde{X} = diag\{\tilde{x}_1, ..., \tilde{x}_P\}$. The partial Discrete Fourier Transform (DFT) matrix of size $P \times L$, where L is the length of the cyclic prefix (CP), is denoted as $F$. Then the noiseless frequency-domain received signal at $P$ pilot-subcarriers, beamformed by the hybrid antenna array of the apparatus 100, at the q-th received OFDM symbol can be expressed as:

$$\tilde{r}(q) = \tilde{F} h_c(q) \in \mathbb{C}^{P \times 1} \tag{1}$$

where $\tilde{F} = \tilde{X}F$, and $h_c(q)$ is the spare beamformed time-domain channel impulse response (CIR) vector with $I$ ($I << L$) non-zero entries at the $q$-th received OFDM symbol.

At step S504, the apparatus 100 estimates the time-domain CIR vector using a compressive sensing algorithm based on the extracted pilot symbols. In one embodiment, the apparatus 100 uses an extended subspace pursuit algorithm, which exploits the property that $h_c(q)$'s share the same tap delay.

At step S506, the apparatus 100 recovers spatial channel responses based on the time-domain CIR vector.

In one embodiment, $h_c(q)$ can be expressed as a linear combination of CIRs for all antennas:

$$h_c(q) = \sum_{m=1}^{M_r} w_{m,q} h_m \tag{2}$$

where $h_m$ is the CIR for the $m$-th antenna. Next, for a matrix as the collection of $h_c(q)$'s as

$$H_c \triangleq [h_c(1) ... h_c(Q)]$$

$$= [h_1 ... h_{M_r}] \begin{bmatrix} w_{1,1} & \cdots & w_{1,Q} \\ \vdots & \ddots & \vdots \\ w_{M_r,1} & \cdots & w_{M_r,Q} \end{bmatrix}$$

$$\triangleq HW \tag{3}$$

where $W$ is defined as the receiving beamforming matrix. Thus, $H$ can be obtained as $H = H_c W^\dagger$, where $(.)^\dagger$ represents the pseudo-inverse of a square or over-determined matrix, indicating that $W$ must be of full row rank ($Q \geq M_r$).

In one embodiment, with multiple transmissions at the transmitting side, the measurements lost in the spatial domain can be compensated for by those obtained in the time domain. In this embodiment, each channel tap is flat fading, and $W$ is designed as a unitary or semi-unitary matrix to avoid amplification of noise.

At step S508, for each channel tap delay, the apparatus 100 calculates a correlation matrix based on the recovered spatial channel responses.

In one embodiment, the tap delay of the i-th path is referred to as $T_i$, and the $T_i$-th row of $H$ is referred to as

$y_i^T$ . To estimate the AoA of the i-th path, denoted as $\theta_i$, the apparatus 100 uses $y_i$, which is the corresponding channel estimation vector:

$$y_i = h_i \begin{bmatrix} 1 \\ \vdots \\ e^{-j\pi(M_r-1)\sin\theta_i} \end{bmatrix}$$

$$= h_i a(\theta_i) \tag{4}$$

where $a(\theta_i)$ is the steering vector for the i-th path. From (4), the ($\theta_i$) can be obtained by a simple correlation-based method, given by

$$\widehat{\varnothing}_{i,Cor} \triangleq -\pi\sin\left(\widehat{\theta}_{i,Cor}\right)$$

$$= \measuredangle\left[\frac{1}{M_r-1}\sum_{m=2}^{M_r} y_i(m)y_i^*(m-1)\right] \tag{5}$$

where $\widehat{\varnothing}_{i,Cor}$ is the phase difference of two consecutive elements in the steering vector, $\widehat{\theta}_{i,Cor}$ is the estimated AoA, $\measuredangle[.]$ and $(.)^*$ are the complex conjugate of a scalar.

In some situations, some channel taps may contain responses of two paths or more. To address this problem, (4) can be re-written as

$$y_i = \sum_{k=1}^{K_i} h_{i,k} \begin{bmatrix} 1 \\ \vdots \\ e^{-j\pi(M_r-1)\sin\theta_i} \end{bmatrix}$$

$$= \begin{bmatrix} a(\theta_{i,1}) \dots a(\theta_{i,K_i}) \end{bmatrix} \begin{bmatrix} h_{i,1} \\ \vdots \\ h_{i,K_i} \end{bmatrix}$$

$$\triangleq A h_{(i)} \tag{6}$$

where $K_i$ is the total number of channel impulse responses corresponding to different paths sampled by i-th channel tap delay, and $h_{(i)}$ is a $K_i$-by-1 vector consisting of the channel gains of the i-th channel tap delay. In one embodiment, allowing for channel estimation error, the apparatus 100 can be modeled as;

$$\hat{y}_i = y_i + e_i \tag{7}$$

where $e_i$ is the channel estimation error vector, which is non-white in general.

To resolve the OCMA problem, the apparatus 100 notifies the transmitting side to transmit training blocks with different transmitting beamforming vectors such that different channel paths will experience different channel gains. As illustrated in FIG. 4, the transmitting beamforming vector $b(t)$ of the transmitting side remains the same for each training block, and the receiving beamforming vector $w(q)$ varies in each training block. Letting $h_{(i)}(t)$ be the $K_i$-by-1 channel gain vector for the i-th channel tap at the t-th transmission training block, and $h_{(i)}(t)$ be variant for the T blocks. The apparatus 100 can calculate the correlation matrix as;

$$R_{\hat{y}_i} \triangleq \frac{1}{T} \sum_{t=1}^{T} \hat{y}_i(t) \hat{y}_i^H(t)$$

$$= A R_{h_{(i)}} A^H + R_{\hat{e}_i} \tag{8}$$

where $R_{h_{(i)}} = \frac{1}{T} \sum_{t=1}^{T} h_{(i)}(t) h_{(i)}^H(t)$ , and $R_{\hat{e}_i}$, is the matrix formed by error vectors. Rank($R_{h_{(i)}}$) = $K_i$, meaning that $T \geq K_i$.

At step S510, the apparatus 100 performs singular value decomposition on the correlation matrix.

At step S512 the apparatus 100 determines whether a channel tap having multiple channel responses is caused by multiple signal paths. When the apparatus 100 determines that the number of path responses on the channel tap is equal to one, the apparatus 100 executes step S514, and when the apparatus determines that the number of path responses on the channel tap is more than one, the apparatus executes step S516.

At step S514, the apparatus 100 estimates AoA of the one path response using a line-fitting or correlation algorithm.

At step S516, the apparatus 100 estimates multiple AoAs of the multiple path responses using a subspace-based algorithm, such as MUSIC or ESPRIT.

In one embodiment, the apparatus 100 performs singular value decomposition on $R_{\hat{y}_i} = A R_{h_{(i)}} A^H$, and obtains

$$R_{y_i} = [U_S U_O] \begin{bmatrix} \Sigma_S & 0 \\ 0 & 0 \end{bmatrix} \begin{bmatrix} U_S^H \\ U_O^H \end{bmatrix} \tag{9}$$

where $\Sigma_S \in \mathbb{C}^{K_i \times K_i}$ is a diagonal matrix with non-zero diagonal entries in descending order, and $U_S \in \mathbb{C}^{M_r \times K_i}$ is the matrix spanning the same column space as $A$, while $U_O$ is its orthogonal complement, i.e., $span(A) = span(U_S) \perp span(U_O)$.

Then, the MUSIC algorithm uses the orthogonal subspace $U_O$ to find multiple AoAs by searching for the peaks of the function defined as

$$f(\theta) \triangleq \frac{1}{\|a^H(\theta) \hat{U}_O\|_2^2} \tag{10}$$

where $\hat{U}_O$ is the estimation of orthogonal subspace due to the presence of additive error in (7). Since the signal-to-noise ratio (SNR) of the channel estimation is much higher than that of the received signal for the antennas (due to the fact $P \gg l$), the non-white property of the error is not apparent. In this embodiment, $M_r$ should be larger than $K$ to render the orthogonal subspace non-empty.

In one embodiment, $span(A) = span(U_S)$, hence there exists a unique and invertible matrix $P$ such that $AP = U_S$. Although P is unknown, $U_S$ can be used to find $\theta_{i,1}, \ldots, \theta_{i,K}$ as follows:

$$AP = U_S$$

$$\Leftrightarrow \begin{bmatrix} A_{odd}P \\ A_{even}P \end{bmatrix} = \begin{bmatrix} U_{s,odd} \\ U_{s,even} \end{bmatrix}$$

$$\Leftrightarrow \begin{bmatrix} A_{odd}P \\ A_{odd}\phi P \end{bmatrix} = \begin{bmatrix} U_{s,odd} \\ U_{s,even} \end{bmatrix} \tag{11}$$

where $\phi = diagl\{e^{-j\pi \sin \theta_i}1, \ldots, e^{-j\pi(M_r-1)\sin \theta_{i,Ki}}\}$, $(.)_{odd}$ denotes the sub-matrix consisting of the odd rows of the matrix, and $(.)_{even}$ denotes the sub-matrix consisting of the even rows of the matrix. By rearranging (11), obtain:

$$U_{s,even} = U_{s,odd}P^{-1}\phi P \qquad\qquad (12)$$

$M_r/2 \geq K_i$, $P^{-1}\phi P$ can be obtained by the least-squares or total-least-squares methods. It is shown that $\phi$ is a diagonal matrix containing the eigenvalues of $P^{-1}\phi P$. After $\phi$ is obtained, the multiple AoAs, $\theta_{i,1}$, ..., $\theta_{i,K_i}$, can be derived easily.

The AoA estimation method and apparatus of the present disclosure resolve the OCMA problem with a hybrid antenna array. Conventional subspace based algorithms such as MUSIC and ESPRIT can be applied, and the number of AoAs that can be estimated by the method and the apparatus is not limited by the number of antennas.

The embodiments shown and described above are only examples. Many details are often found in the art, therefore, many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A method for estimating angle of arrival of signals in a wireless communication system include a transmitting side and a receiving side, the method comprising:

   receiving, by the receiving side, a plurality of signals transmitted by the transmitting side, **characterised in that** the plurality of signals transmitted by the transmitting side further comprises a plurality of training blocks and each one of the plurality of training block comprises a plurality of consecutive Orthogonal Frequency Division Multiplexing (OFDM) symbols, wherein the OFDM symbols comprise pilot symbols at certain subcarriers, the plurality of training blocks are transmitted by the transmitting side using different transmitting beamforming vectors, and the plurality of consecutive OFDM symbols of each one of the plurality of training blocks are received by the receiving side using different receiving beamforming vectors;
   extracting, by the receiving side, a plurality of pilot symbols from the received signals (S502);
   estimating, by the receiving side, time-domain channel responses using a compressive sensing algorithm based on the extracted pilot symbols (S504);
   recovering, by the receiving side, spatial channel responses based on the estimated time-domain channel responses (S506);
   obtaining, by the receiving side, a plurality of channel taps based on the recovered spatial channel responses;
   calculating, by the receiving side, a correlation matrix, for each one of the plurality of channel taps, based on the recovered spatial channel responses (S508);
   performing, by the receiving side, singular value decomposition on the correlation matrix for each one of the plurality of channel taps to obtain a singular value representation of the correlation matrix (S510);
   determining, by the receiving side, a number of responses caused by different paths for each one of the plurality of channel taps (S512); and
   estimating, by the receiving side, angle of arrival, for each one of the plurality of channel taps, based on the determined number of responses and the singular value representation of the correlation matrix (S516).

2. The method of claim 1, the step of estimating angle of arrival, by the receiving side, for each one of the plurality of channel taps, based on the determined number of responses and the singular value representation of the correlation matrix, further comprises:
   estimating angle of arrival using a line-fitting algorithm when the determined number is equal to one.

3. The method of claim 1, the step of estimating angle of arrival, by the receiving side, for each one of the plurality of channel taps, based on the determined number of responses and the singular value representation of the correlation matrix, further comprises:
   estimating angle of arrival using a subspace-based algorithm when the determined number of channel responses is larger than one.

4. The method of claim 3, wherein the subspace-based algorithm further comprises: a Multiple Signal Classification (MUSIC) algorithm and a Estimation of Signal Parameters via Rotational Invariance Techniques (ESPRIT) algorithm.

5. The method of claim 1, wherein the transmitting side and the receiving side are each comprised of multiple antennas in a multiple-input and multiple-output (MIMO) wireless communication system.

6. The method of claim 5, wherein the multiple antennas of the receiving side further comprise a hybrid antenna array.

7. An apparatus for estimating angle of arrival of signals, working as a receiving side, in a wireless communication system, wherein the wireless communication system further comprises a transmitting side, the apparatus comprising:

> a communication unit (106);
> a processor (102); and
> a storage unit (104) for storing at least one computer program, wherein the at least one computer program comprises instructions which are executed by the processor, and performs a method comprising:

>> receiving, by the communication unit, a plurality of signals transmitted by the transmitting side, **characterised in that** the plurality of signals transmitted by the transmitting side further comprises a plurality of training blocks and each one of the plurality of training block comprises a plurality of consecutive Orthogonal Frequency Division Multiplexing (OFDM) symbols, wherein the OFDM symbols comprise pilot symbols at certain subcarriers, the plurality of training blocks are transmitted by the transmitting side using different transmitting beamforming vectors, and the plurality of consecutive OFDM symbols of each one of the plurality of training blocks are received by the receiving side using different receiving beamforming vectors;
>> extracting a plurality of pilot symbols from the received signals;
>> estimating time-domain channel responses using a compressive sensing algorithm based on the extracted pilot symbols;
>> recovering spatial channel responses based on the estimated time-domain channel responses;
>> obtaining a plurality of channel taps based on the recovered spatial channel responses;
>> calculating a correlation matrix, for each one of the plurality of channel taps, based on the recovered spatial channel responses;
>> performing singular value decomposition on the correlation matrix, for each one of the plurality of channel taps, to obtain a singular value representation of the correlation matrix;
>> determining a number of responses caused by different paths for each one of the plurality of channel taps; and
>> estimating angle of arrival, for each one of the plurality of channel taps, based on the determined number of responses and the singular value representation of the correlation matrix.

8. The apparatus of claim 7, the step of estimating angle of arrival, for each one of the plurality of channel taps, based on the determined number of responses and the singular value representation of the correlation matrix, further comprises:
estimating angle of arrival using a line-fitting algorithm when the determined number is equal to one.

9. The apparatus of claim 7, the step of estimating angle of arrival, for each one of the plurality of channel taps, based on the determined number of responses and the singular value representation of the correlation matrix, further comprises:
estimating angle of arrival using a subspace-based algorithm when the determined number of channel responses is larger than one.

**Patentansprüche**

1. Verfahren zur Schätzung des Ankunftswinkels von Signalen in einem drahtlosen Kommunikationssystem mit einer Sende- und einer Empfangsseite, wobei das Verfahren umfasst:

> Empfangen einer Vielzahl von Signalen, die von der Sendeseite gesendet werden, durch die Empfangsseite, **dadurch gekennzeichnet, dass** die Vielzahl von Signalen, die von der Sendeseite gesendet werden, ferner eine Vielzahl von Trainingsblöcken umfasst und jeder der Vielzahl von Trainingsblöcken eine Vielzahl von aufeinanderfolgenden Orthogonal Frequency Division Multiplexing (OFDM - Orthogonales Frequenzmultiplexverfahren)-Symbolen umfasst, wobei die OFDM-Symbole Pilotsymbole auf bestimmten Unterträgern umfassen, die Vielzahl von Trainingsblöcken von der Sendeseite unter Verwendung unterschiedlicher Sende-Beamforming-Vektoren gesendet werden und die Vielzahl von aufeinanderfolgenden OFDM-Symbolen jedes der Vielzahl von Trainingsblöcken von der Empfangsseite unter Verwendung unterschiedlicher Empfangs-Beamforming-Vektoren empfangen werden;

Extrahieren einer Vielzahl von Pilotsymbolen aus den empfangenen Signalen durch die Empfangsseite (S502);

Schätzen der Kanalantworten im Zeitbereich durch die Empfangsseite unter Verwendung eines Compressive-Sensing-Algorithmus auf der Grundlage der extrahierten Pilotsymbole (S504);

Wiederherstellen der räumlichen Kanalantworten durch die Empfangsseite auf der Grundlage der geschätzten Kanalantworten im Zeitbereich (S506);

Erhalten einer Vielzahl von Kanalabgriffen durch die Empfangsseite auf der Grundlage der wiederhergestellten räumlichen Kanalantworten;

Berechnen einer Korrelationsmatrix durch die Empfangsseite für jeden der mehreren Kanalabgriffe auf der Grundlage der wiederhergestellten räumlichen Kanalantworten (S508);

Durchführen einer Singulärwertzerlegung der Korrelationsmatrix durch die Empfangsseite für jeden der Vielzahl von Kanalabgriffen, um eine Singulärwertdarstellung der Korrelationsmatrix zu erhalten (S510);

Bestimmen einer Anzahl von Antworten durch die Empfangsseite, die durch unterschiedliche Pfade für jeden der mehreren Kanalabgriffe verursacht werden (S512); und

Schätzen des Ankunftswinkels durch die Empfangsseite für jeden der Vielzahl von Kanalabgriffen auf der Grundlage der ermittelten Anzahl von Antworten und der Singulärwertdarstellung der Korrelationsmatrix (S516).

2. Verfahren nach Anspruch 1, wobei der Schritt des Schätzens des Ankunftswinkels durch die Empfangsseite für jeden der Vielzahl von Kanalabgriffen auf der Grundlage der ermittelten Anzahl von Antworten und der Singulärwertdarstellung der Korrelationsmatrix ferner umfasst:

Schätzung des Ankunftswinkels mithilfe eines Linienanpassungsalgorithmus, wenn die ermittelte Zahl gleich eins ist.

3. Verfahren nach Anspruch 1, wobei der Schritt des Schätzens des Ankunftswinkels durch die Empfangsseite für jeden der Vielzahl von Kanalabgriffen auf der Grundlage der ermittelten Anzahl von Antworten und der Singulärwertdarstellung der Korrelationsmatrix ferner umfasst:

Schätzung des Ankunftswinkels mithilfe eines Unterraum-basierten Algorithmus, wenn die ermittelte Anzahl der Kanalantworten größer als eins ist.

4. Verfahren nach Anspruch 3, wobei der unterraumbasierte Algorithmus weiterhin umfasst: einen Multiple Signal Classification (MUSIC)-Algorithmus und einen Estimation of Signal Parameters via Rotational Invariance Techniques (ESPRIT)-Algorithmus.

5. Verfahren nach Anspruch 1, wobei die Sendeseite und die Empfangsseite jeweils aus mehreren Antennen in einem drahtlosen Kommunikationssystem mit mehreren Eingängen und Ausgängen (MIMO) bestehen.

6. Verfahren nach Anspruch 5, wobei die mehreren Antennen der Empfangsseite zusätzlich eine hybride Antennenanordnung umfassen.

7. Eine Vorrichtung zur Schätzung des Ankunftswinkels von Signalen, die als Empfangsseite in einem drahtlosen Kommunikationssystem arbeitet, wobei das drahtlose Kommunikationssystem außerdem eine Sendeseite umfasst, wobei die Vorrichtung umfasst:

eine Kommunikationseinheit (106);

einen Prozessor (102); und

eine Speichereinheit (104) zum Speichern von mindestens einem Computerprogramm, wobei das mindestens eine Computerprogramm Anweisungen umfasst, die vom Prozessor ausgeführt werden, und ein Verfahren ausführt, das umfasst:

Empfangen einer Vielzahl von Signalen durch die Kommunikationseinheit, die von der Sendeseite gesendet werden, **dadurch gekennzeichnet, dass** die Vielzahl von Signalen, die von der Sendeseite gesendet werden, ferner eine Vielzahl von Trainingsblöcken umfasst und jeder der Vielzahl von Trainingsblöcken eine Vielzahl von aufeinanderfolgenden Orthogonal Frequency Division Multiplexing (OFDM)-Symbolen umfasst, wobei die OFDM-Symbole Pilotsymbole auf bestimmten Unterträgern umfassen, die Vielzahl von Trainingsblöcken von der Sendeseite unter Verwendung unterschiedlicher Sende-Beamforming-Vektoren gesendet werden und die Vielzahl von aufeinanderfolgenden OFDM-Symbolen jedes der Vielzahl von Trainingsblöcken von der Empfangsseite unter Verwendung unterschiedlicher Empfangs-Beamforming-Vektoren empfangen werden;

Extrahieren einer Vielzahl von Pilotsymbolen aus den empfangenen Signalen;

Schätzung der Kanalantworten im Zeitbereich mithilfe eines Compressive-Sensing-Algorithmus auf Grundlage der extrahierten Pilotsymbole;

Wiederherstellen räumlicher Kanalantworten auf der Grundlage der geschätzten Kanalantworten im Zeitbereich;

Erhalten einer Vielzahl von Kanalabgriffen basierend auf den wiederhergestellten räumlichen Kanalantworten;

Berechnen einer Korrelationsmatrix für jeden der mehreren Kanalabgriffe auf der Grundlage der wiederhergestellten räumlichen Kanalantworten;

Durchführen einer Singulärwertzerlegung an der Korrelationsmatrix für jeden der Vielzahl von Kanalabgriffen, um eine Singulärwertdarstellung der Korrelationsmatrix zu erhalten;

Bestimmen einer Anzahl von Antworten, die durch unterschiedliche Pfade für jeden der Vielzahl von Kanalabgriffen verursacht werden; und

Schätzen des Ankunftswinkels für jeden der mehreren Kanalabgriffe auf der Grundlage der ermittelten Anzahl von Antworten und der Singulärwertdarstellung der Korrelationsmatrix.

8. Vorrichtung nach Anspruch 7, wobei der Schritt des Schätzens des Ankunftswinkels für jeden der Vielzahl von Kanalabgriffen auf der Grundlage der ermittelten Anzahl von Antworten und der Singulärwertdarstellung der Korrelationsmatrix ferner umfasst:
Schätzung des Ankunftswinkels mithilfe eines Linienanpassungsalgorithmus, wenn die ermittelte Zahl gleich eins ist.

9. Vorrichtung nach Anspruch 7, wobei der Schritt des Schätzens des Ankunftswinkels für jeden der Vielzahl von Kanalabgriffen auf der Grundlage der ermittelten Anzahl von Antworten und der Singulärwertdarstellung der Korrelationsmatrix ferner umfasst:
Schätzung des Ankunftswinkels mithilfe eines Unterraum-basierten Algorithmus, wenn die ermittelte Anzahl der Kanalantworten größer als eins ist.

## Revendications

1. Un procédé d'estimation de l'angle d'arrivée des signaux dans un système de communication sans fil comprenant un côté émission et un côté réception, lε procédé comprenant :

la réception, par le côté réception, d'une pluralité de signaux transmis par le côté transmission, **caractérisée par le fait que** la pluralité de signaux transmis par le côté transmission comprend en outre une pluralité de blocs d'entraînement et que chacun de la pluralité de blocs d'entraînement comprend une pluralité de symboles consécutifs de multiplexage par répartition orthogonale de la fréquence (OFDM), dans lesquels les symboles OFDM comprennent des symboles pilotes sur certaines sous-porteuses,

la pluralité de blocs d'entraînement est transmise par le côté émission à l'aide de différents vecteurs de formation de faisceau d'émission, et la pluralité de symboles OFDM consécutifs de chacun des blocs d'entraînement est reçue par le côté réception à l'aide de différents vecteurs de formation de faisceau de réception ;

l'extraction, par le côté réception, d'une pluralité de symboles pilotes à partir des signaux reçus (S502) ;

l'estimation, par le côté récepteur, des réponses du canal dans le domaine temporel en utilisant un algorithme de détection compressive basé sur les symboles pilotes extraits (S504) ;

la récupération, par le côté réception, des réponses spatiales du canal sur la base des réponses estimées du canal dans le domaine temporel (S506) ;

l'obtention, par la partie réceptrice, d'une pluralité de prises de canal sur la base des réponses récupérées du canal spatial ;

le calcul, par le côté réception, d'une matrice de corrélation, pour chacune de la pluralité de prises de canal, sur la base des réponses spatiales au canal récupérées (S508) ;

la réalisation, par le côté réception, d'une décomposition en valeurs singulières de la matrice de corrélation pour chacune de la pluralité de prises de canal afin d'obtenir une représentation en valeurs singulières de la matrice de corrélation (S510) ;

la détermination, par le côté réception, d'un nombre de réponses causées par des chemins différents pour chacune de la pluralité de prises de canal (S512) ; et

l'estimation, par le côté réception, de l'angle d'arrivée pour chacune des prises du canal, sur la base du nombre déterminé de réponses et de la représentation de la valeur singulière de la matrice de corrélation (S516).

2. Dans la méthode de la revendication 1, l'étape consistant à estimer l'angle d'arrivée, par le côté réception, pour chacune des prises du canal, sur la base du nombre déterminé de réponses et de la représentation de la valeur singulière de la matrice de corrélation, comprend en outre :

l'estimation de l'angle d'arrivée à l'aide d'un algorithme d'ajustement de ligne lorsque le nombre déterminé est égal à un.

3.  Dans la méthode de la revendication 1, l'étape consistant à estimer l'angle d'arrivée, par le côté réception, pour chacune des prises du canal, sur la base du nombre déterminé de réponses et de la représentation de la valeur singulière de la matrice de corrélation, comprend en outre :

    l'estimation de l'angle d'arrivée à l'aide d'un algorithme basé sur le sous-espace lorsque le nombre déterminé de réponses au canal est supérieur à un.

4.  Méthode de la revendication 3, dans laquelle l'algorithme basé sur le sous-espace comprend en outre : un algorithme de classification de signaux multiples (MUSIC) et un algorithme d'estimation des paramètres du signal via des techniques d'invariance rotationnelle (ESPRIT).

5.  Méthode de la revendication 1, dans laquelle le côté émission et le côté réception sont chacun constitués d'antennes multiples dans un système de communication sans fil à entrées et sorties multiples (MIMO).

6.  Méthode de la revendication 5, dans laquelle les antennes multiples du côté réception comprennent en outre un réseau d'antennes hybrides.

7.  Appareil pour estimer l'angle d'arrivée des signaux, fonctionnant comme côté réception, dans un système de communication sans fil, dans lequel le système de communication sans fil comprend également un côté transmission, l'appareil comprenant :

    une unité de communication (106) ;
    un processeur (102) ; et
    une unité de stockage (104) pour stocker au moins un programme d'ordinateur, dans lequel au moins un programme d'ordinateur comprend des instructions qui sont exécutées par le processeur, et exécute une méthode comprenant :

    la réception, par l'unité de communication, d'une pluralité de signaux transmis par le côté émetteur, **caractérisée par le fait que** la pluralité de signaux transmis par le côté émetteur comprend en outre une pluralité de blocs d'apprentissage et que chacun des blocs d'apprentissage comprend une pluralité de symboles consécutifs de multiplexage par répartition orthogonale de la fréquence (OFDM), dans lequel les symboles OFDM comprennent des symboles pilotes sur certaines sous-porteuses, la pluralité de blocs d'apprentissage est transmise par le côté émission en utilisant différents vecteurs de formation de faisceau d'émission, et la pluralité de symboles OFDM consécutifs de chacun des blocs d'apprentissage est reçue par le côté réception en utilisant différents vecteurs de formation de faisceau de réception ;
    l'extraction d'une pluralité de symboles pilotes à partir des signaux reçus ;
    l'estimation des réponses du canal dans le domaine temporel à l'aide d'un algorithme de détection compressive basé sur les symboles pilotes extraits ;
    la récupération des réponses spatiales du canal sur la base des réponses estimées du canal dans le domaine temporel ;
    l'obtention d'une pluralité de prises de canal sur la base des réponses spatiales du canal récupérées ; le calcul d'une matrice de corrélation, pour chacune de la pluralité de prises de canal, sur la base des réponses spatiales
    du canal récupérées ;
    la réalisation d'une décomposition en valeurs singulières de la matrice de corrélation pour chacune de la pluralité de prises de canal afin d'obtenir une représentation en valeurs singulières de la matrice de corrélation ;
    la détermination d'un nombre de réponses causées par des chemins différents pour chacune de la pluralité de prises de canal ; et
    l'estimation de l'angle d'arrivée pour chacune des prises du canal, sur la base du nombre déterminé de réponses et de la représentation de la valeur singulière de la matrice de corrélation.

8.  Appareil de la revendication 7, l'étape consistant à estimer l'angle d'arrivée pour chacune des prises du canal, sur la base du nombre déterminé de réponses et de la représentation de la valeur singulière de la matrice de corrélation, comprend en outre :
l'estimation de l'angle d'arrivée à l'aide d'un algorithme d'ajustement de ligne lorsque le nombre déterminé est égal à un.

9. Appareil de la revendication 7, l'étape consistant à estimer l'angle d'arrivée pour chacune des prises du canal, sur la base du nombre déterminé de réponses et de la représentation de la valeur singulière de la matrice de corrélation, comprend en outre :
l'estimation de l'angle d'arrivée à l'aide d'un algorithme basé sur le sous-espace lorsque le nombre déterminé de réponses au canal est supérieur à un.

FIG. 1

FIG. 2

FIG. 3

Training period T×Q = 2×3 = 6

**Transmitting Side (b_t)**      $b_1$          $b_2$

**Receiving Side (w_q)**     $w_1 \neq w_2 \neq w_3$        $w_1 \neq w_2 \neq w_3$

            $t = 1$            $t = 2$

| OFDM symbol 1 | OFDM symbol 2 | OFDM symbol 3 | OFDM symbol 4 | OFDM symbol 5 | OFDM symbol 6 |
|---|---|---|---|---|---|
| $q = 1$ | $q = 2$ | $q = 3$ | $q = 1$ | $q = 2$ | $q = 3$ |

FIG. 4

START

Extract pilot symbols from received OFDM symbols — S502

Estimate time-domain channel responses using a compressive algorithm based on the extracted pilot symbols — S504

Recover spatial channel responses based on the time-domain channel responses — S506

Calculate a correlation matrix based on the recovered spatial channel responses — S508

Perform singular value decomposition on the correlation matrix — S510

S512

multiple path responses?

NO                    YES

S514

Estimate AoA using line-fitting/correlation

S516

Estimate AoA using MUSIC/ESPRIT

END

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62927438
- US 62928414

- US 20050250564 A1
- US 20190212409 A1

### Non-patent literature cited in the description

- 2D Unitary ESPRIT Based Super-Resolution Channel Estimation for Millimeter-Wave Massive MIMO With Hybrid Precoding. **ANWEN LIAO et al.** ARXIV.ORG. CORNELL UNIVERSITY LIBRARY, 30 October 2017